# EUROPÄISCHE PATENTSCHRIFT

(11) **EP 3 230 211 B1**
(45) Veröffentlichungstag und Bekanntmachung des Hinweises auf die Patenterteilung: **16.03.2022**
(21) Anmeldenummer: 15813265.4
(22) Anmeldetag: 04.12.2015
(51) Int. Cl.: C01G 49/06, C01G 49/14

(54) **VERFAHREN ZUR WEITERVERARBEITUNG VON EISENSULFAT-HEPTAHYDRAT**
PROCESS FOR THE FURTHER PROCESSING OF IRON SULPHATE HEPTAHYDRATE
PROCÉDÉ DE TRANSFORMATION DE SULFATE DE FER HEPTAHYDRATÉ

(30) Priorität: 09.12.2014 DE 102014018131; 06.03.2015 EP 15000654; 22.06.2015 DE 102015007890
(43) Veröffentlichungstag der Anmeldung: 18.10.2017
(73) Patentinhaber: Kronos International, Inc., 51373 Leverkusen (DE)
(72) Erfinder: MEDVED, Mitja, 51375 Leverkusen (DE); PIERAU, Thomas, 51371 Leverkusen (DE)
(86) Internationale Anmeldenummer: PCT/EP2015/002454
(87) Internationale Veröffentlichungsnummer: WO 2016/091372

(56) Entgegenhaltungen:
- DE-A1- 1 546 076
- GB-A- 1 093 162

## Beschreibung

### Gebiet der Erfindung

Die Erfindung richtet sich auf ein Verfahren zur Weiterverarbeitung von Eisensulfat-Heptahydrat zu Eisensulfat-Monohydrat und optional zu Eisenoxiden bzw. Eisenhydroxiden.

### Technologischer Hintergrund der Erfindung

Bei der Herstellung von Titandioxid nach dem sogenannten Sulfatverfahren wie auch beim Beizen oder Ätzen von Eisenmetallen fallen große Mengen an Eisensulfat an. Eisensulfat wird in verschiedenen Bereichen verwendet, beispielsweise als Additiv in der Futter- und Düngemittelindustrie, bei der Wasseraufbereitung in Kläranlagen, als Reduktionsmittel für Chromat in Zement oder als Rohstoff für die Eisenoxidherstellung.

Grundsätzlich liegt Eisensulfat aus technischen Prozessen in 3 Hydratstufen vor, als Hepta-, Tetra- oder Monohydrat. Bei der genannten Titandioxidherstellung nach dem Sulfatverfahren und bei der Beizung oder Ätzung von Eisenmetallen fällt das Eisensulfat hauptsächlich als Heptahydrat an. Eisensulfat-Heptahydrat hat den höchsten Wassergehalt der drei Hydratstufen und lässt sich bei Temperaturen über 25°C schlecht lagern, weil es dabei im eigenen Kristallwasser schmilzt. Das Eisensulfat-Heptahydrat weist auch den geringsten Eisengehalt von allen Hydratformen auf, was eine Reihe von Nachteilen in den Zielanwendungen zur Folge hat.

Es wurden deswegen verschiedene Prozesse entwickelt, um das Eisensulfat-Heptahydrat zu niedrigeren Hydratstufen weiterzuverarbeiten.

Die Umwandlung des Heptahydrats zu Tetrahydrat oder zu Monohydrat erfolgt heutzutage großtechnisch überwiegend durch verschiedene Arten der thermischen Trocknung. Der Nachteil dieser Verfahren besteht jedoch in einem relativ hohen Energieverbrauch, welcher mindestens der Verdampfungswärme des zu entfernenden Kristallwassers entspricht. Alternativ kann ein Schmelzverfahren gemäß DE 1 230 409 angewendet werden, bei dem das Eisensulfat-Heptahydrat auf bis zu 95°C erhitzt wird, so dass es in seinem Kristallwasser schmilzt und Eisensulfat-Monohydrat ausfällt und abgetrennt wird. Dieses Verfahren ist energiegünstiger als die thermische Trocknung, allerdings verbleiben entsprechend dem Löslichkeitsverhalten im System Eisensulfat-Wasser etwa 25 Gew.-% Eisensulfat in der Mutterlauge.

Aus DE 1 546 076 ist ein Verfahren zur Regenerierung einer verbrauchten Ätzlösung bekannt, bei dem der verbrauchten Ätzlösung Eisensulfat-Monohydrat zugesetzt wird, woraufhin sich Eisensulfat-Heptahydrat bildet, das als Feststoff-abgetrennt wird. Anschließend kann das gewonnene Heptahydrat auf 100°C bis 200°C erhitzt werden, um erneut Eisensulfat-Monohydrat zu bilden, welches in den Prozess zurückgeführt wird. DE 1 546 076 beschäftigt sich nicht mit der Einstellung der Restfeuchte des erzeugten Eisensulfat-Monohydrats.

Es besteht somit das Bedürfnis nach einem Verfahren zur Weiterverarbeitung von Eisensulfat-Heptahydrat, das mindestens die Nachteile des Stands der Technik überwindet.

### Aufgabenstellung und Kurzbeschreibung der Erfindung

Der Erfindung liegt die Aufgabe zugrunde, ein Verfahren zur Weiterverarbeitung von Eisensulfat-Heptahydrat zu Eisensulfat-Monohydrat und gegebenenfalls weiteren Eisenverbindungen anzugeben, das energieeffizient ist und sich durch eine hohe Rückgewinnung an Eisenverbindungen auszeichnet sowie einen steuerbaren Restfeuchtegehalt und Eisen(III)-Gehalt im erzeugten Eisensulfat-Monohydrat-Produkt ermöglicht.

Die Aufgabe wird gelöst durch ein Verfahren zur Weiterverarbeitung von Eisensulfat-Heptahydrat gekennzeichnet durch folgende Verfahrensschritte:
a) Bilden einer wässrigen Lösung bzw. Suspension von Eisensulfat-Heptahydrat in einem Behälter (Mischung I),
b) Fördern von Mischung I in ein erstes Druckgefäß und Aufheizen der Mischung I auf eine Temperatur T1, die über der Siedetemperatur der Mischung I bei Atmosphärendruck liegt, wobei sich ein Druck P1 ausbildet und wobei sich Eisensulfat-Monohydrat als Feststoff und eine Lösung II bilden,
c) Abtrennen des Eisensulfat-Monohydrat-Feststoffs aus Lösung II in einem zweiten Druckgefäß bei einer Temperatur T2 und einem Druck P2, wobei sich ein abgetrennter Eisensulfat-Monohydrat-Feststoff bildet, der Eisensulfat-Monohydrat und anhaftende Lösung II umfasst,
d) Fördern des abgetrennten Eisensulfat-Monohydrat-Feststoffs in ein drittes Druckgefäß mit einem Druck P3, wobei P3 geringer ist als P2 und wobei die Temperatur des in das dritte Druckgefäß eintretenden Eisensulfat-Monohydrat-Feststoffs über der Siedetemperatur von Lösung II bei dem Druck P3 liegt und wobei im Verlaufe von Schritt d) die Temperatur des Eisensulfat-Monohydrat-Feststoffs auf eine zum Druck P3 korrespondierende Temperatur T3 fällt.

Weitere vorteilhafte Ausformungen der Erfindung sind in den Unteransprüchen angegeben.

### Figuren

- Figur 1:: Löslichkeitskurve von Eisensulfat in Wasser (nach: Gmelins Handbuch der anorganischen Chemie, System-Nr. 59 "Eisen", Teil B-Lieferung 2, 8. Aufl. 1930, S. 401)
- Figur 2:: Löslichkeitskurve von Eisensulfat in Wasser gemäß Fig. 1, erweitert mit weiteren Messpunkten bis etwa 160°C
- Figur 3:: Schematisches Fließbild einer Ausführung des erfindungsgemäßen Verfahrens

### Beschreibung der Erfindung

Alle im Folgenden offenbarten Angaben bezüglich Temperatur, Druck, Konzentration in Gew.-% usw. sind so zu verstehen, dass alle Werte, die im Bereich der dem Fachmann bekannten jeweiligen Messgenauigkeit liegen, mit umfasst sind.

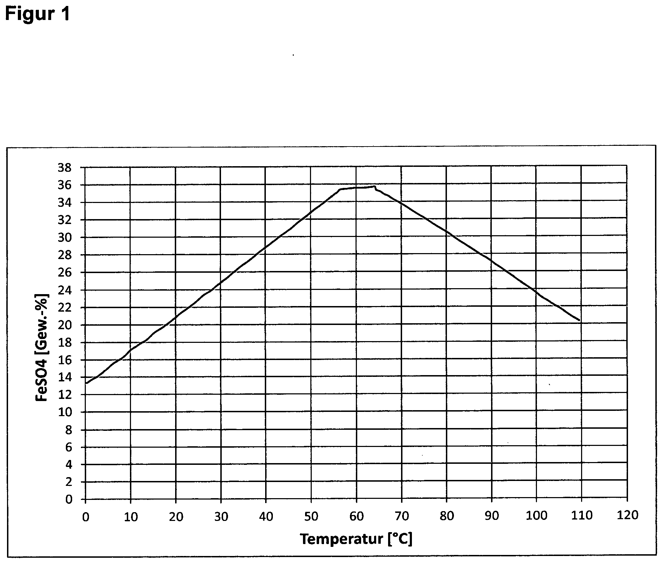

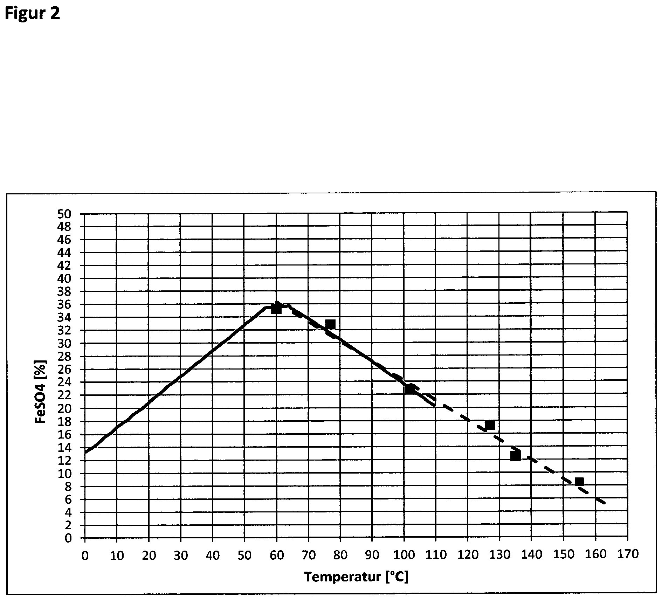

Das erfindungsgemäße Verfahren geht aus von der Erkenntnis, dass die Löslichkeit von Eisensulfat in Wasser oberhalb einer Temperatur von etwa 60°C abnimmt (Figur 1). Im Rahmen der Erfindung wurden Untersuchungen zum Verhalten der Löslichkeit von Eisensulfat in Wasser bei Temperaturen oberhalb von 110°C bis etwa 160°C und bei entsprechendem Druck durchgeführt. Figur 2 zeigt die entsprechenden Analysenwerte (Punkte) und den daraus ermittelten Verlauf der Löslichkeitskurve als gestrichelte Linie. Aus Figur 2 ergibt sich, dass bei einer Temperatur oberhalb von etwa 135°C die Löslichkeit von Eisensulfat geringer wird als die Löslichkeit bei einer Temperatur von 5°C, welche in technischen Systemen die untere Grenze der praktisch umsetzbaren Kühltemperatur darstellt. Üblicherweise werden jedoch mit Hilfe von Verdampfungskühlanlagen mit vertretbarem energetischen Aufwand lediglich minimale Temperaturen von ca. 15°C erreicht, bei denen die Eisensulfatlöslichkeit etwa 18 Gew.-% beträgt, und somit 18 Gew.-% Eisensulfat in der Lösung (Mutterlauge) verbleiben (siehe Fig. 1).

Gemäß der vorliegenden Erfindung werden wässrige Eisensulfatlösungen und/oder Eisensulfatsuspensionen über die Siedetemperatur, die sich bei Atmosphärendruck einstellt, hinaus in einem Druckgefäß erhitzt. Dabei sinkt die Löslichkeit von Eisensulfat mit steigender Temperatur, und Eisensulfat-Monohydrat fällt aus. Bekanntermaßen geht die steigende Temperatur mit einer Druckerhöhung einher.

In einer besonderen Ausführung der Erfindung wird die Lösung auf über 110°C, insbesondere auf 135°C bis 300°C und insbesondere bevorzugt auf 140°C bis 160°C erhitzt. Die Temperatur von 160°C wird beispielsweise bei einem Druck von etwa 6 bar erreicht, welcher in Form von Wasserdampf üblicherweise in chemischen Anlagen standardmäßig zur Verfügung steht. Die Untersuchungen im Rahmen der vorliegenden Erfindung haben ergeben, dass die Eisensulfatlöslichkeit bei 140°C etwa 10 bis 12 Gew.-% und bei 160°C etwa 4 bis 6 Gew.-% beträgt und damit deutlich niedriger liegt als bei den bekannten, auf einem Schmelzprozess basierenden Verfahren.

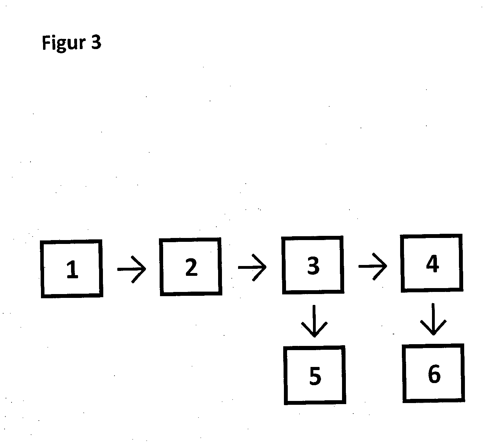

Ein schematisches Fließbild einer Ausführung des erfindungsgemäßen Verfahrens zeigt Figur 3.

In einem ersten Schritt (Schritt a) wird in einem Behälter (1) eine wässrige Lösung und/oder eine Suspension von Eisensulfat-Heptahydratr (Mischung I) hergestellt. Die Eisensulfatlösung/-suspension ist gesättigt oder bevorzugt übersättigt.

Die Mischung I wird in ein erstes beheizbares Druckgefäß (Autoklav) (2) gefördert (Schritt b). Hier wird die Mischung I auf eine Temperatur T1, die über der Siedetemperatur bei Atmosphärendruck liegt, erhitzt, bevorzugt auf über 110°C, insbesondere auf 135°C bis 300°C und insbesondere bevorzugt auf 140°C bis 160°C. Durch die druckfeste Ausführung bildet sich ein zur jeweiligen Temperatur T1 korrespondierender Überdruck P1 aus. Gemäß der sich verringernden Löslichkeit von Eisensulfat in Wasser bei hohen Temperaturen fällt Eisensulfat-Monohydrat aus.

Anschließend erfolgt die Abtrennung (3) des Eisensulfat-Monohydrats (Schritt c), und es verbleibt eine Eisensulfat-arme Lösung, sogenannte Mutterlauge (Lösung II) (5).

Zum Abtrennen des ausgefallenen Eisensulfat-Monohydrats können verschiedene, dem Fachmann bekannte Apparaturen eingesetzt werden, beispielsweise ein Zyklon oder Filter, vorzugsweise ein Druckfilter oder Vakuumtrommelfilter oder eine Dekanterzentrifuge oder ein Kerzenfilter, wobei alle Filtrationsapparate druckfest ausgeführt sein können.

Verfahrensbedingt verbleibt an dem abgetrennten Eisensulfat-Monohydrat-Feststoff anhaftend Mutterlauge (Lösung II) in Form von Zwickelwasser und Restfeuchte.

In einer Ausführung der Erfindung erfolgt die Abtrennung bei einer Temperatur T2 und einem Druck P2, wobei T2 der Temperatur T1 und P2 dem Druck P1 entsprechen, so dass eine Wiederanlösung des abgetrennten Eisensulfat-Monohydrats möglichst vermieden wird.

In einer alternativen Ausführung der Erfindung erfolgt die Abtrennung bei einer Temperatur T2 und einem Druck P2, wobei T2 größer ist als T1 und P2 größer ist als P1. Die erhöhte Temperatur T2 kann beispielsweise durch Einleiten von überhitztem Dampf und/oder von einem heißen Gas in die Filtrationsapparatur erreicht werden. Vorzugsweise wird der überhitzte Dampf und/oder das heiße Gas durch den feuchten Filterkuchen durchgeleitet. In dem Eisensulfat-Monohydrat-Filterkuchen herrscht daraufhin die Temperatur T2 und der Druck P2.

Auf diese Weise kann die Restfeuchte des Eisensulfat-Monohydrat-Produkts gesteuert werden. Die Einleitung des überhitzten Dampfs und/oder eines heißen Gases durch den feuchten Filterkuchen und die damit verbundene Temperaturerhöhung im Filterkuchen führt zum Verdampfen der am Eisensulfat-Monohydrat-Feststoff anhaftenden Mutterlauge (Lösung II) in Form von Zwickelwasser und Restfeuchte. Wird die anhaftende Mutterlauge durch Verdampfen eingeengt und/oder ausgetrieben, kristallisiert gleichzeitig aufgrund der Temperaturerhöhung weiteres Eisensulfat-Monohydrat aus. Im Ergebnis werden eine höhere Ausbeute an Eisensulfat-Monohydrat-Feststoff und eine gezielte Restfeuchte im so gewonnenen Filterkuchen erreicht.

Zusätzlich bilden sich während des Einleitens des überhitzten Dampfs und/oder eines heißen Gases an der Oberfläche des bereits ausgebildeten grobkristallinen Eisensulfat-Monohydrat-Feststoffs durch die weitere Kristallisation des in der anhaftenden Mutterlauge (Lösung II) gelösten Eisensulfat-Monohydrats kleine Einzelkristalle. Diese tragen zur Verklebung des grobkristallinen Eisensulfat-Monohydrat-Feststoffes bei, was zu einer für die Weiterverarbeitung des Produkts vorteilhaften Voragglomeration des Feststoffs führt. Vorteilhaft ist, dass dabei wegen der relativ kurzen Einwirkung des überhitzen Dampfes und/oder eines heißen Gases auf den Feststoff neben dem Feststoff selbst nur der Dampf- bzw. Gasraum erhitzt wird und die Flüssigkeit bzw. die Suspension (Mutterlauge), falls sie sich in der Apparatur befindet, nicht mit erhitzt wird, was zu einer zusätzlichen Energieeinsparung führt.

Der überhitzte Dampf und/oder das heiße Gas wird vorzugsweise mit einer Temperatur oberhalb der Siedetemperatur der Mutterlauge bei dem vorhandenen Druck eingeleitet. In der Regel reicht eine Überhitzung von bis zu 5°C über die Temperatur T1 aus, um einen vorteilhaften Effekt zur Steuerung der Restfeuchte zu erzielen. Aus energetischer Sicht haben sich Überhitzungen von bis zu 100°C, bevorzugt bis zu 60°C und besonders bevorzugt von bis zu 20°C über die Temperatur T1 als vorteilhaft erwiesen.

In einer besonderen Ausführung der Erfindung ist die Abtrennvorrichtung (3) in das erste Druckgefäß (2) integriert. Beispielsweise kann es sich in diesem Fall bei dem ersten Druckgefäß (2) um einen druckfest ausgeführten und beheizbaren Trommelfilter handeln. Dem Fachmann sind entsprechende Apparaturen bekannt.

Auch bei dieser Ausführung ist es möglich, die Restfeuchte des Eisensulfat-Monohydrat-Produkts zu steuern, indem während der Abtrennung (3), welche im Anschluss an die abgeschlossene Bildung des Eisensulfat-Monohydrat-Feststoffs in der Mischung I (Schritt b) stattfindet, überhitzter Dampf und/oder ein heißes Gas in die Apparatur eingeleitet und mit dem Feststoff kontaktiert wird, so dass in dem Feststoff gegenüber T1 und P1 eine erhöhte Temperatur T2 und ein erhöhter korrespondierender Druck P2 herrschen.

Der abgetrennte feuchte Eisensulfat-Monohydrat-Feststoff wird zur weiteren Restfeuchteeinstellung über eine Druckschleuse in ein weiteres Druckgefäß (4) gefördert (Schritt d), in dem ein Druck P3 herrscht, der geringer ist als der Druck, der bei Schritt c) herrscht. Die Temperatur des in das weitere Druckgefäß (4) eingeführten Eisensulfat-Monohydrat-Feststoffs liegt über der entsprechenden Siedetemperatur der Mutterlauge (Lösung II) bei dem herrschenden Druck P3. Infolgedessen erfolgt eine Entspannungsverdampfung des Wassers aus der am Feststoff anhaftenden Mutterlauge, und weiteres Eisensulfat-Monohydrat kristallisiert aus. Abschließend wird das Eisensulfat-Monohydrat-Produkt abgezogen (6). Durch Kontrolle der Druckerniedrigung auf P3 und der sich dabei einstellenden korrespondierenden Temperatur T3 im weiteren Druckgefäß (4) kann die Restfeuchte des so erzeugten Eisensulfat-Monohydrat-Produkts (6) gesteuert werden.

In einer weiteren Ausführung der Erfindung ist eine zusätzliche Steuerung der Restfeuchte des Eisensulfat-Monohydrats auch dadurch möglich, dass das weitere Druckgefäß (4) direkt oder indirekt beheizbar ausgerüstet ist und damit die Temperatur T3 konstant gehalten bzw. eine höhere Temperatur durch Beheizen eingestellt werden kann. Auf diese Weise kann weitere anhaftende Mutterlauge effizienter verdampft und eine noch geringere Restfeuchte des Eisensulfat-Monohydrats (6) erzielt werden. Hierbei kristallisiert ebenfalls weiteres Eisensulfat-Monohydrat gemäß des Löslichkeitsverhaltens aus der noch anhaftenden Mutterlauge aus, wodurch die Ausbeute nochmals erhöht wird und die oben beschriebene Voragglomeration erfolgt.

Das wie oben beschrieben erzeugte Eisensulfat-Monohydrat-Produkt (6) weist bevorzugt eine Restfeuchte von maximal 20 Gew.-%, insbesondere von maximal 10 Gew.-%, und insbesondere bevorzugt von maximal 5 Gew.-% auf, bezogen auf die Gesamtmasse des Produkts. Die Feuchte wird als freies Wasser durch Trocknung bei 105 °C bis zur Gewichtskonstanz bestimmt.

Das erzeugte Eisensulfat-Monohydrat-Produkt (6) kann optional anschließend mit üblichen Verfahren agglomeriert werden, gegebenenfalls unter Verwendung von bekannten Bindemitteln wie Wasser oder Eisensulfatlösung und/oder von organischen Bindemitteln beispielsweise auf Basis von Sacchariden oder Carboxymethylcellulose.

Alternativ wird das erfindungsgemäße Verfahren so geführt, dass das erzeugte Eisensulfat-Monohydrat-Produkt einen minimierten Gehalt an dreiwertigem Eisen aufweist. Dreiwertiges Eisen kann im Verlaufe des Verfahrens gebildet werden, wenn oxidierende Bedingungen herrschen. Weiterhin kann das Eisensulfat-Monohydrat-Produkt dreiwertiges Eisen enthalten, wenn bereits der Ausgangsstoff Eisensulfat-Heptahydrat dreiwertiges Eisen enthält. Die Bildung von dreiwertigem Eisen kann beispielsweise bei der Herstellung der Mischung I (1), bei der Kristallisation von Eisensulfat-Monohydrat im ersten Druckgefäß (2), beim Abtrennen des Eisensulfat-Monohydrats aus der Mutterlauge (3) oder bei der Behandlung im weiteren Druckgefäß (4) geschehen.

Verschiedene Maßnahmen sind möglich - einzeln oder gemeinsam umgesetzt -, um den Gehalt an dreiwertigem Eisen im Eisensulfat-Monohydrat-Produkt zu minimieren:
- Zugabe von metallischem Eisen oder anderen geeigneten Reduktionsmitteln bei der Herstellung der Mischung I (1) und/oder bei der Bildung von Eisensulfat-Monohydrat-Feststoff (2),
- Zugabe von Säuren (z.B. Schwefelsäure) oder anderen Stoffen zur Hemmung der Oxidation bei der Herstellung der Mischung I (1) und/oder bei der Bildung von Eisensulfat-Monohydrat-Feststoff (2),
- Zuführung von nicht-oxidierendem Gas wie beispielsweise Stickstoff oder von Dämpfen wie beispielsweise Wasserdampf bei der Herstellung von Mischung I (1), der Bildung von Eisensulfat-Monohydrat-Feststoff (2), der Abtrennung (3) oder der Behandlung im weiteren Druckgefäß (4).

Beispielsweise enthält die Mischung I, die im ersten Schritt (Schritt a) hergestellt wird, Schwefelsäure Die Schwefelsäurekonzentration in der Mischung I kann dabei bis zu 60 Gew.-% Schwefelsäure betragen. Für die technische Ausführung liegt die Schwefelsäurekonzentration in der Mischung I vorteilhafterweise im Bereich bis maximal 35 Gew.-%, bevorzugt bis 20 Gew.-%, insbesondere bis 10 Gew.-% und insbesondere bevorzugt zwischen 0,1 bis 4,0 Gew.-%. Da bekanntermaßen die Löslichkeit von Eisensulfat bei steigenden Schwefelsäurekonzentrationen sinkt (siehe Figur 1), ergibt sich in dieser besonderen Ausführung einerseits eine höhere Ausbeute an Eisensulfat-Monohydrat, und andererseits verbleibt ein geringerer Anteil des gelösten Eisens in der Mutterlauge (Lösung II). Desweiteren wird durch die Anwesenheit von Schwefelsäure eine unerwünschte Oxidation des zweiwertigen Eisens sowohl bei der Herstellung von Mischung I (Schritt a) sowie bei der Bildung von Eisensulfat-Monohydrat-Feststoff (Schritt b) und bei der Abtrennung des Eisensulfat-Monohydrats teilweise gehemmt oder gänzlich verhindert.

Weiterhin können zur Mischung I zusätzlich oxidationsverhindernde Additive wie z.B. Natriumsulfit oder z.B. schweflige Säure bzw. Schwefelsäure, Natriumdithionit, Natriumthiosulfat, Natriumhydroxymethansulfinat sowie z.B. Ascorbinsäure oder Sorbinsäure zugegeben werden. Die Additivmenge liegt in der Regel unter 5 Gew.-%, bevorzugt unter 3 Gew. % und besonders bevorzugt unter 1 Gew. % bezogen auf die Gesamtmasse der Mischung I.

Das Eisensulfat-Monohydrat-Produkt weist bevorzugt einen Gehalt an dreiwertigem Eisen von maximal 10 Gew.-%, insbesondere von maximal 3 Gew.-% und insbesondere bevorzugt von unter 1 Gew.-% bezogen auf Gesamteisen auf.

In einer besonderen Ausführung kann die Lösung II (5) zumindest zum Teil in den Behälter (1) zurückgeführt werden.

In einer weiterentwickelten Ausführung der Erfindung wird der in der Lösung II (5) verbliebene Eisengehalt ebenfalls zu einem großen Teil zurückgewonnen. Hierzu wird die Lösung II (5), welche nicht in den Behälter (1) zurückgeführt wurde, in einen Oxidationsreaktor gefördert. Der Oxidationsreaktor ist in einer besonderen Ausführung druckfest ausgeführt und wird mit Luft oder Sauerstoff betrieben. Darüber hinaus können zur Unterstützung der Oxidation Additive zugegeben werden wie Salze (z.B. NaCl) und/oder alkalische Substanzen (z.B. NaOH) und/oder Oxidationskatalysatoren beispielsweise auf Oxidbasis (z.B. Ceroxid, Manganoxid). Die Temperatur wird bevorzugt auf über 25°C, insbesondere auf 70°C bis 300°C und insbesondere bevorzugt auf 140°C bis 160°C eingestellt. Bei der Oxidation bilden sich Eisenhydroxide bzw. Eisenoxide in fester Form und eine Lösung III, die nach Abtrennung der Feststoffe nahezu eisenfrei ist. "Nahezu eisenfrei" bedeutet im Rahmen der Erfindung ein Gesamteisengehalt von weniger als 0,5 Gew.-%.

Das erfindungsgemäß gewonnene Eisensulfat-Monohydrat kann in bekannter Weise verwendet werden, beispielsweise als Additiv in der Futter- und Düngemittelindustrie, in der Wasseraufbereitung, als Reduktionsmittel allgemein und insbesondere zur Chromatreduktion in Zement. Des Weiteren besteht die Möglichkeit zur Weiterverarbeitung zu Eisenoxidpigmenten oder zur Herstellung von Schwefelsäure über Röstverfahren.

Das erfindungsgemäß hergestellte Eisenoxid bzw. Eisenhydroxid kann allgemein in Entschwefelungsverfahren eingesetzt sowie weiter zur Herstellung von Eisenoxidpigmenten oder für die Roheisenproduktion verwendet werden.

### Beispiele:

Im Folgenden soll das erfindungsgemäße Verfahren auf Basis von Stoffbilanzen beispielhaft dargestellt werden, ohne dass damit eine Einschränkung der Erfindung beabsichtigt ist.

### Beispiel 1:

Zunächst wird aus 1000 kg Eisensulfat-Heptahydrat und 180 kg Wasser eine übersättigte wässrige Eisensulfat-Heptahydrat-Lösung hergestellt, die einen Eisensulfatgehalt von etwa 41 Gew.-% und einen gerechneten Eisengehalt von etwa 180 kg aufweist (Mischung I). Die Schwefelsäurekonzentration beträgt 0,6 Gew.-%.

Die Mischung I wird auf 65°C erhitzt und in ein beheizbares Druckgefäß gefördert. In dem Druckgefäß wird die Temperatur auf 160°C erhöht, wobei sich ein Druck von etwa 6 bar einstellt. Während der Erhitzung fällt gemäß der Löslichkeitskurve Eisensulfat-Monohydrat als Feststoff in einer Menge von etwa 522 kg aus, entsprechend etwa 172 kg Eisen.

Das Eisensulfat-Monohydrat wird unter den erhöhten Druck- und Temperaturbedingungen mit anhaftender Mutterlauge in einem druckfesten Drehtrommelfilter als Filterkuchen abgetrennt. Dabei verbleibt eine eisenarme Lösung in einer Menge von etwa 658 kg mit einem Gehalt an Eisen von etwa 8 kg (Lösung II). Die Restfeuchte des abgetrennten Eisensulfat-Monohydrats liegt bei 15 Gew.-% und der Gehalt an dreiwertigem Eisen bei weniger als 1,7 Gew.-%.

Bei einer anschließenden Druckentspannung auf Umgebungsdruck in einer mit Dampf beheizbaren Mischschnecke wird infolge der einsetzenden unterstützten Entspannungsverdampfung die Restfeuchte auf 8 Gew.-% reduziert.

Um in einem weiteren Schritt den Eisengehalt der Lösung II weiter zu reduzieren, wird der Lösung II eine etwa 36%ige NaCI-Lösung zugegeben. Die Zugabemenge an NaCl von 85 kg wird aus der stöchiometrisch notwendigen Menge, bezogen auf den Sulfatgehalt in der Mutterlauge, berechnet und wird in einem Überschuß von 10% eingesetzt. Die NaCI-haltige Lösung II wird anschließend in einen druckfesten und beheizten Oxidationsreaktor gefördert. Durch Zugabe von erwärmter Luft werden die vorhandenen Eisenbestandteile in der Lösung II oxidiert. Unter den Bedingungen von etwa 140 bis 160°C und etwa 5 bis 6 bar und einem Umsetzungsgrad von etwa 80% wird Eisenhydroxid und Eisenoxid (Fe₂O₃) als Feststoff in einer Menge von etwa 10 kg (bezogen auf das Eisenoxid) entsprechend etwa 6 kg Eisen gebildet.

Es verbleibt eine Menge von etwa 796 kg Abwasser (Lösung III) mit einer Menge von etwa 2 kg gelöstem Eisen, entsprechend einem Eisengehalt von etwa 0,25 Gew.-%.

Das erfindungsgemäße Verfahren ermöglicht somit, etwa 96 Gew.-% des Eisens aus dem ursprünglich eingesetzten Eisensulfat-Heptahydrat in Eisensulfat-Monohydrat umzuwandeln und in einer besonderen Ausführung etwa weitere 3 Gew.-% Eisen als Eisenoxid bzw. Eisenhydroxid rückzugewinnen.

### Beispiel 2:

Werden die Bedingungen aus Beispiel 1 insofern verändert, dass die Schwefelsäurekonzentration in der Ausgangssuspension auf 2,2 Gew.-% eingestellt wird, so wird ein Gehalt an dreiwertigem Eisen im Eisensulfat-Monohydrat von weniger als 0,9 Gew.-% erreicht.

### Beispiel 3:

Die Bedingungen aus Beispiel 1 werden so verändert, dass der Filterkuchen auf dem Drehtrommelfilter mit Dampf, welcher um 15°C überhitzt ist, beaufschlagt wird. Hierdurch verringert sich die Restfeuchte des abgetrennten Eisensulfat-Monohydrats vor der Druckentspannung auf 9 Gew.-%. Bei der anschließenden Druckentspannung auf Umgebungsdruck in einer Mischschnecke wird infolge der Entspannungsverdampfung die Restfeuchte auf 4 Gew.-% reduziert.

## Patentansprüche

1. Verfahren zur Weiterverarbeitung von Eisensulfat-Heptahydrat **gekennzeichnet durch** folgende Verfahrensschritte:
a) Bilden einer wässrigen Lösung bzw. Suspension von Eisensulfat-Heptahydrat in einem Behälter (Mischung I),
b) Fördern von Mischung I in ein erstes Druckgefäß und Aufheizen der Mischung I auf eine Temperatur T1, die über der Siedetemperatur der Mischung I bei Atmosphärendruck liegt, wobei sich ein Druck P1 ausbildet und wobei sich Eisensulfat-Monohydrat als Feststoff und eine Lösung II bilden,
c) Abtrennen des Eisensulfat-Monohydrat-Feststoffs aus Lösung II in einem zweiten Druckgefäß bei einer Temperatur T2 und einem Druck P2, wobei sich ein abgetrennter Eisensulfat-Monohydrat-Feststoff bildet, der Eisensulfat-Monohydrat und anhaftende Lösung II umfasst,
d) Fördern des abgetrennten Eisensulfat-Monohydrat-Feststoffs in ein drittes Druckgefäß mit einem Druck P3, wobei P3 geringer ist als P2 und wobei die Temperatur des in das dritte Druckgefäß eintretenden Eisensulfat-Monohydrat-Feststoffs über der Siedetemperatur von Lösung II bei dem Druck P3 liegt und wobei im Verlaufe von Schritt d) die Temperatur des Eisensulfat-Monohydrat-Feststoffs auf eine zum Druck P3 korrespondierende Temperatur T3 fällt.

2. Verfahren nach Anspruch 1 **dadurch gekennzeichnet, dass**
in Schritt b) auf über 110°C, insbesondere auf 135°C bis 300°C, insbesondere bevorzugt auf 140°C bis 160°C aufgeheizt wird.

3. Verfahren nach Anspruch 1 oder 2 **dadurch gekennzeichnet, dass** in Schritt c) überhitzter Dampf oder ein heißes Gas mit einer Temperatur von mindestens T1 eingeleitet wird.

4. Verfahren nach Anspruch 3 **dadurch gekennzeichnet, dass**
die Temperatur des überhitzten Dampfs oder des heißen Gases bis zu 100°C, bevorzugt bis zu 60°C und insbesondere bis zu 20°C über T1 liegt.

5. Verfahren nach einem oder mehreren der Ansprüche 1 bis 4 **dadurch gekennzeichnet, dass**
das zweite Druckgefäß beheizbar ist.

6. Verfahren nach Anspruch 1 **dadurch gekennzeichnet, dass**
das dritte Druckgefäß beheizbar ist.

7. Verfahren nach einem oder mehreren der Ansprüche 1 bis 6 **dadurch gekennzeichnet, dass**
das erste Druckgefäß und das zweite Druckgefäß dasselbe Druckgefäß sind, und/oder
Schritt c) bei einer Temperatur T2 und einem Druck P2 durchgeführt wird, wobei T2 mindestens T1 und P2 mindestens P1 entspricht, und/oder am Ende von Schritt d) der Eisensulfat-Monohydrat-Feststoff eine Restfeuchte von maximal 20 Gew.-%, bevorzugt maximal 10 Gew.-% und insbesondere maximal 5 Gew.-% bezogen auf Gesamtmasse Feststoff aufweist, und/oder am Ende von Schritt d) der Eisensulfat-Monohydrat-Feststoff einen Gehalt an dreiwertigem Eisen von maximal 10 Gew.-% bevorzugt maximal 3 Gew.-% und insbesondere maximal 1 Gew.-% bezogen auf Gesamteisen aufweist.

8. Verfahren nach einem oder mehreren der Ansprüche 1 bis 7 **dadurch gekennzeichnet, dass**
in Anschluss an Schritt d) der Eisensulfat-Monohydrat-Feststoff agglomeriert wird.

9. Verfahren nach Anspruch 8 **dadurch gekennzeichnet, dass**
bei der Agglomerierung ein anorganisches oder organisches Bindemittel eingesetzt wird.

10. Verfahren nach einem oder mehreren der Ansprüche 1 bis 9 **dadurch gekennzeichnet, dass**
Lösung II zumindest teilweise rückgeführt wird in den Behälter von Schritt a).

11. Verfahren nach einem oder mehreren der Ansprüche 1 bis 10 **dadurch gekennzeichnet, dass**
sich im Anschluss an Verfahrensschritt d) folgende Verfahrensschritte anschließen:
e) Fördern von Lösung II in einen Oxidationsreaktor und Zuführung von Luft oder Sauerstoff und gegebenenfalls von Additiven,
f) Einstellen einer Temperatur im Bereich von über 25°C, insbesondere auf 70°C bis 300°C, insbesondere bevorzugt auf 140°C bis 160°C und Ausfällen von Eisenoxid und/oder Eisenhydroxid und Bildung einer nahezu eisenfreien Lösung III,
g) Abtrennen des Eisenoxids und/oder Eisenhydroxids.

12. Verfahren nach Anspruch 11 **dadurch gekennzeichnet, dass** in Schritt e) als Additiv Salze oder alkalische Substanzen oder Oxidationskatalysatoren eingesetzt werden.

13. Verfahren nach Anspruch 11 oder 12 **dadurch gekennzeichnet, dass**
der Oxidationsreaktor druckfest und gegebenenfalls beheizbar ausgerüstet ist.

14. Verfahren nach einem oder mehreren der Ansprüche 1 bis 13 **dadurch gekennzeichnet, dass**
das Eisensulfat-Monohydrat in folgenden Bereichen verwendet wird:
Futtermittel, Düngemittel, Wasseraufbereitung, Reduktionsmittel beispielsweise zur Chromatreduktion in Zement, Herstellung von Eisenoxidpigment, Herstellung von Schwefelsäure durch Röstung.

15. Verfahren nach einem oder mehreren der Ansprüche 11 bis 13 **dadurch gekennzeichnet, dass**
das Eisenoxid und Eisenhydroxid in Entschwefelungsverfahren eingesetzt werden oder zu Eisenoxidpigment oder Roheisen weiterverarbeitet werden.

## Claims

1. Method for processing iron sulfate heptahydrate, comprising:
a) providing a first mixture comprising an aqueous solution or suspension of iron sulfate heptahydrate in a vessel (Mixture I);
b) conveying Mixture I into a first pressure vessel and heating the Mixture I to a temperature T1 that is above the boiling temperature of the Mixture I at atmospheric pressure, wherein a first pressure P1 is formed and wherein solid iron sulfate monohydrate and a solution II are formed;
c) separating the solid iron sulfate monohydrate from the solution II in a second pressure vessel at a temperature T2 and a pressure P2 to form a separated iron sulfate solid that comprises iron sulfate monohydrate and an adhered portion of the solution II;
d) conveying the separated iron sulfate monohydrate solid into a third pressure vessel having a pressure P3, wherein P3 is less than P2 and wherein the temperature of the iron sulfate monohydrate solid entering the third pressure vessel is above the boiling temperature of solution II at the pressure P3, and wherein over the course of step d) the temperature of the iron sulfate monohydrate solid falls to a temperature T3 corresponding to the pressure P3.

2. The method of claim 1, **characterized in that**
in step b) heating is carried out at above 110 °C, in particular to 135 °C to 300 °C, more preferably to 140 °C to 160 °C.

3. The method of claim 1 or 2, **characterized in that**
in step c) superheated steam or a hot gas having a temperature of at least T1 is introduced.

4. The method of claim 3, **characterized in that**
the superheated steam or hot gas is at a temperature that is not more than 100 °C, preferably not more than 60 °C and more preferably not more than 20 °C greater than T1.

5. The method of claim 3, **characterized in that**
the second pressure vessel is heatable.

6. The method of claim 1, **characterized in that**
the third pressure vessel is heatable.

7. The method according to one or more of claims 1 to 6, **characterized in that** the first pressure vessel and the second pressure vessel are the same pressure vessel; and/or
step c) is carried out at a temperature T2 and a pressure P2, wherein T2 corresponds to at least T1 and P2 corresponds to at least P1; and/or
at the end of step d) the ferrous sulfate monohydrate solid has a residual moisture content of at most 20 % by weight, preferably at most 10 % by weight and in particular at most 5 % by weight based on the total mass of the solid; and/or
at the end of step d) the ferrous sulfate monohydrate solid has a trivalent iron content of at most 10 % by weight, preferably at most 3 % by weight and in particular at most 1 % by weight based on the total iron content.

8. The method according to one or more of claims 1 to 7, **characterized in that** following step d), the ferrous sulfate monohydrate solid is agglomerated.

9. The method according to claim 8, **characterized in that**
an inorganic or organic binder is used in the agglomeration.

10. The method according to one or more of claims 1 to 9, **characterized in that** the solution II is at least partially recycled into the container of step a).

11. The method according to one or more of claims 1 to 10, **characterized in that** the following process steps follow process step d):
e) conveying solution II into an oxidation reactor and supplying air or oxygen and optionally additives,
f) setting a temperature in the range above 25 °C, in particular to 70 °C to 300 °C, more preferably to 140 °C to 160 °C, and precipitating iron oxide and/or iron hydroxide and forming an almost iron-free solution III,
g) separating the iron oxide and/or iron hydroxide.

12. The method according to claim 11, **characterized in that**
in step e) salts or alkaline substances or oxidation catalysts are used as additive.

13. The method according to claim 11 or 12, **characterized in that** the oxidation reactor is pressure-resistant and optionally heatable.

14. The method according to one or more of claims 1 to 13 **characterized in that** the ferrous sulfate monohydrate is used in the following fields:
feed, fertilizer, water treatment, reducing agent for example for chromate reduction in cement, production of iron oxide pigment, production of sulfuric acid by roasting.

15. The method according to one or more of claims 11 to 13 **characterized in that** the iron oxide and iron hydroxide are used in desulfurization processes or are further processed to iron oxide pigment or pig iron.

## Revendications

1. Procédé de transformation de sulfate de fer heptahydraté, **caractérisé par** des étapes de procédé suivantes :
a) l'obtention d'une solution ou suspension aqueuse de sulfate de fer heptahydraté dans un contenant (mélange I),
b) le transport du mélange I dans un premier récipient sous pression et le chauffage du mélange I à une température T1 qui est supérieure à la température d'ébullition du mélange I à pression atmosphérique, dans lequel une pression P1 se forme et dans lequel sont obtenus du sulfate de fer monohydraté en tant que solide et une solution II,
c) la séparation du sulfate de fer monohydraté solide de la solution II dans un deuxième récipient sous pression à une température T2 et à une pression P2, dans lequel un sulfate de fer monohydraté solide séparé est obtenu, qui comprend du sulfate de fer monohydraté et de la solution II collante,
d) le transport du sulfate de fer monohydraté solide séparé dans un troisième contenant sous pression avec une pression P3, dans lequel P3 est inférieure à P2 et dans lequel la température du sulfate de fer monohydraté solide entrant dans le troisième récipient sous pression est supérieure à la température d'ébullition de la solution II à la pression P3 et dans lequel la température du sulfate de fer monohydraté solide baisse sur une température T3 correspondant à la pression P3 au cours de l'étape d).

2. Procédé selon la revendication 1, **caractérisé en ce que** le chauffage est effectué à l'étape b) à une température supérieure à 110 °C, en particulier à une température de 135 °C jusqu'à 300 °C, en particulier de manière préférée à une température de 140 °C à 160 °C.

3. Procédé selon la revendication 1 ou 2, **caractérisé en ce que** de la vapeur surchauffée ou un gaz très chaud est introduite ou introduit avec une température d'au moins T1 à l'étape c).

4. Procédé selon la revendication 3, **caractérisé en ce que** la température de la vapeur surchauffée ou du gaz très chaud est supérieure à T1 jusqu'à 100 °C, de manière préférée jusqu'à 60 °C et en particulier jusqu'à 20 °C.

5. Procédé selon l'une quelconque ou plusieurs des revendications 1 à 4, **caractérisé en ce que** le deuxième récipient sous pression peut être chauffé.

6. Procédé selon la revendication 1, **caractérisé en ce que** le troisième récipient sous pression peut être chauffé.

7. Procédé selon l'une quelconque ou plusieurs des revendications 1 à 6, **caractérisé en ce que** le premier récipient sous pression et le deuxième récipient sous pression sont le même récipient sous pression, et/ou
l'étape c) est mise en œuvre à une température T2 et à une pression P2, dans lequel T2 correspond au moins à T1 et P2 à au moins P1, et/ou
le sulfate de fer monohydraté solide présente à la fin de l'étape d) une humidité résiduelle de 20 % en poids au maximum, de manière préférée de 10 % en poids au maximum et en particulier de 5 % en poids au maximum par rapport au poids total de solide, et/ou
le sulfate de fer monohydraté solide présente à la fin de l'étape d) une teneur en fer trivalent de 10 % en poids au maximum, de manière préférée de 3 % en poids au maximum et en particulier de 1 % en poids au maximum par rapport au fer total.

8. Procédé selon l'une quelconque ou plusieurs des revendications 1 à 7, **caractérisé en ce que** le sulfate de fer monohydraté solide est aggloméré à la suite de l'étape d).

9. Procédé selon la revendication 8, **caractérisé en ce que** lors de l'agglomération, un liant inorganique ou organique est utilisé.

10. Procédé selon l'une quelconque ou plusieurs des revendications 1 à 9, **caractérisé en ce que** la solution II est ramenée au moins en partie dans le contenant de l'étape a).

11. Procédé selon l'une quelconque ou plusieurs des revendications 1 à 10, **caractérisé en ce que** des étapes de procédé suivantes suivent directement dans le prolongement de l'étape de procédé d) :
e) le transport de la solution II dans un réacteur d'oxydation et l'amenée d'air ou d'oxygène et éventuellement d'additifs,
f) le réglage d'une température dans la plage supérieure à 25 °C, en particulier à 70 °C jusqu'à 300 °C, en particulier de manière préférée sur 140 °C jusqu'à 160 °C et la précipitation d'oxyde de fer et/ou d'hydroxyde de fer et l'obtention d'une solution III quasiment sans fer,
g) la séparation de l'oxyde de fer et/ou de l'hydroxyde de fer.

12. Procédé selon la revendication 11, **caractérisé en ce que**
des sels ou des substances alcalines ou des catalyseurs d'oxydation sont utilisés à l'étape e) en tant qu'additif.

13. Procédé selon la revendication 11 ou 12, **caractérisé en ce que**
le réacteur d'oxydation est équipé de manière résistante à la pression et éventuellement de manière à pouvoir être chauffé.

14. Procédé selon l'une quelconque ou plusieurs des revendications 1 à 13, **caractérisé en ce que** le sulfate de fer monohydraté est employé dans des domaines suivants :
alimentation animale, engrais, traitement de l'eau, agents de réduction par exemple pour réduire le chromate dans du ciment, fabrication de pigments à base d'oxyde de fer, fabrication d'acide sulfurique par torréfaction.

15. Procédé selon l'une quelconque ou plusieurs des revendications 11 à 13, **caractérisé en ce que** l'oxyde de fer et l'hydroxyde de fer sont utilisés dans un procédé de désulfuration ou sont transformés en des pigments d'oxyde de fer ou d'acier brut.
